# EUROPÄISCHE PATENTANMELDUNG

(11) **EP 2 093 443 A2**
(43) Veröffentlichungstag der Anmeldung: **26.08.2009**
(21) Anmeldenummer: 09152248.2
(22) Anmeldetag: 06.02.2009
(51) Int. Cl.: F16D 1/10

(54) **Kopplungseinrichtung und Antriebsstrang mit einer solchen Kopplungseinrichtung**

(30) Priorität: 12.02.2008 DE 102008008738
(71) Anmelder: BorgWarner Inc., Auburn Hills, MI 48326 (US)
(72) Erfinder: BÖLLING, Jochen, 76534, Baden-Baden (DE); HEINZ, Volker, 67354, Römerberg (DE); HALM, Christian Bernhard, 69190, Walldorf (DE)
(74) Vertreter: Leckel, Ulf

(57) **Zusammenfassung**

Die vorliegende Erfindung betrifft eine Kopplungseinrichtung (2) aus einem Kopplungsteil (20) mit einer Außenverzahnung (52) und einem Kopplungsteil (18) mit einer Innenverzahnung (36), wobei die Außenverzahnung (52) und die Innenverzahnung (36) unter Ausbildung einer Steckverzahnung (54) ineinandergreifen, so dass die Kopplungsteile (18, 20) über die Steckverzahnung (54) in spielbehafteter Drehmitnahmeverbindung stehen. Die Kopplungsteile (18, 20) sind über eine in Umfangsrichtung (14, 16) wirkende Federeinrichtung (56) aus einem oder mehreren Elementen in eine Ausgangsdrehposition vorgespannt, in der die beiden Kopplungsteile (18, 20) in einer vorbestimmten Drehposition relativ zueinander angeordnet sind. Erfindungsgemäß sind die Elemente der Federeinrichtung (56) außerhalb der Steckverzahnung (54) angeordnet. Die vorliegende Erfindung betrifft ferner einen Antriebsstrang mit einer Kopplungseinrichtung (2) zwischen einer Antriebseinheit (4) und einer Kupplungsvorrichtung, einem Drehschwingungsdämpfer oder einer Kupplungs-Dämpfer-Einheit (6).

## Beschreibung

Die vorliegende Erfindung betrifft eine Kopplungseinrichtung aus einem Kopplungsteil mit einer Außenverzahnung und einem Kopplungsteil mit einer Innenverzahnung, wobei die Außenverzahnung und die Innenverzahnung unter Ausbildung einer Steckverzahnung ineinandergreifen, so dass die Kopplungsteile über die Steckverzahnung in spielbehafteter Drehmitnahmeverbindung stehen, wobei die Kopplungsteile über eine Umfangsrichtung wirkende Federeinrichtung aus einem oder mehreren Elementen in eine Ausgangsdrehposition vorgespannt sind, in der die beiden Kopplungsteile in einer vorbestimmten Drehposition relativ zueinander angeordnet sind. Die vorliegende Erfindung betrifft ferner einen Antriebsstrang mit einer Kupplungsvorrichtung oder/und einem Drehschwingungsdämpfer und mit einer Antriebseinheit, wobei die Kupplungsvorrichtung oder der Drehschwingungsdämpfer über eine Kopplungseinrichtung mit der Antriebseinheit gekoppelt ist.

Die WO 2007/045418 A1 beschreibt eine Kopplungseinrichtung zur Übertragung eines Drehmoments. Die bekannte Kopplungseinrichtung umfasst zwei Kopplungsteile, wobei das eine Kopplungsteil mit einer Außenverzahnung und das andere Kopplungsteil mit einer Innenverzahnung versehen ist. Die Außenverzahnung greift unter Ausbildung einer Steckverzahnung in die Innenverzahnung ein, so dass ein Drehmoment des einen Kopplungsteils über die Steckverzahnung auf das andere Kopplungsteil übertragen werden kann. Um das Ineinanderstecken der beiden Kopplungsteile zu vereinfachen bzw. überhaupt zu ermöglichen, sind die Außen- und Innenverzahnung derart ausgebildet, dass ein gewisses Spiel in der Steckverzahnung verbleibt, so dass die Kopplungsteile nach dem Ineinanderstecken in spielbehafteter Drehmitnahmeverbindung stehen. Dieses Fügespiel innerhalb der Steckverzahnung führt beim Betrieb der Kopplungseinrichtung - insbesondere bei niedrigen Drehzahlen - zu einer starken Geräuschentwicklung, wobei hier auch von Klappergeräuschen gesprochen wird. Um diesen Klappergeräuschen entgegenzuwirken, schlägt die WO 2007/045418 A1 ferner eine in Umfangsrichtung wirkende Federeinrichtung zwischen den Kopplungsteilen vor, über die die Kopplungsteile in einer Ausgangsdrehposition vorgespannt sind, in der die beiden Kopplungsteile in einer vorbestimmten Drehposition relativ zueinander angeordnet sind. Die Federeinrichtung setzt sich dabei im Wesentlichen aus gebogenen Federblechen zusammen, die innerhalb der Steckverzahnung zwischen den einander zugewandten Zahnflanken der Außen- und Innenverzahnung angeordnet sind. Die Federbleche nutzen somit das vorhandene Fügespiel innerhalb der Steckverzahnung und bewirken, dass die in die eine Umfangsrichtung weisenden Zahnflanken der Außenverzahnung in der Ausgangsdrehposition durch die Federeinrichtung gegen die in die entgegengesetzte Umfangsrichtung weisenden Zahnflanken der Innenverzahnung vorgespannt sind. Hierdurch wird ein Abheben der gegeneinander gedrückten Zahnflanken selbst bei Drehmomentstößen und bei niedrigen Drehzahlen vermieden, wodurch die Geräuschentwicklung bzw. ein Klappergeräusch wirksam unterdrückt werden kann.

Die bekannten Kopplungseinrichtungen haben sich in der Praxis insoweit bewährt, als dass die Geräuschentwicklung wirksam reduziert werden konnte. Es besteht dennoch der Nachteil, dass die Herstellung der Federeinrichtungen für die bekannten Kopplungseinrichtungen erschwert ist, zumal die engen Verzahnungstoleranzen der Steckverzahnung berücksichtigt werden muss. Darüber hinaus kann ein Verschleiß innerhalb der Steckverzahnung, also beispielsweise ein Verschleiß an der Innen- und Außenverzahnung oder an der Federeinrichtung, dazu führen, dass die Vorspannkraft der Federeinrichtung im Laufe der Zeit verloren geht, so dass es nach einem längeren Betrieb wieder zu einer verstärkten Geräuschentwicklung kommen kann.

Es ist daher eine Aufgabe der vorliegenden Erfindung, eine Kopplungseinrichtung mit einer Federeinrichtung zu schaffen, bei der die Herstellung der Federeinrichtung vereinfacht und eine wirksame Unterdrückung von Klappergeräuschen selbst bei längerer Betriebsdauer sichergestellt ist. Der vorliegenden Erfindung liegt ferner die Aufgabe zugrunde, einen Antriebsstrang mit einer Kupplungsvorrichtung oder/und einem Drehschwingungsdämpfer und mit einer Antriebseinheit zu schaffen, die über eine solche vorteilhafte Kopplungseinrichtung gekoppelt sind.

Diese Aufgabe wird durch die in den Patentansprüchen 1 bzw. 15 angegebenen Merkmale gelöst. Vorteilhafte Ausführungsformen der Erfindung sind Gegenstand der Unteransprüche.

Die erfindungsgemäße Kopplungseinrichtung setzt sich zunächst aus zwei Kopplungsteilen zusammen, wobei das eine Kopplungsteil eine Außenverzahnung und das andere Kopplungsteil eine Innenverzahnung aufweist. Die Außenverzahnung und die Innenverzahnung greifen unter Ausbildung einer Steckverzahnung ineinander, so dass die Kopplungsteile über die Steckverzahnung in spielbehafteter Drehmitnahmeverbindung stehen. Unter einer Steckverzahnung ist hierbei derjenige Abschnitt zu verstehen, in dem die Außenverzahnung und die Innenverzahnung ineinandergreifen, wobei dies nicht notgedrungen über die gesamte Länge der Außen- und Innenverzahnung erfolgen muss. Um Klappergeräusche, die von einem Aneinanderschlagen der einander zugewandten Zahnflanken von Außen- und Innenverzahnung herrühren, zu unterdrücken, ist ferner eine in Umfangsrichtung wirkende Federeinrichtung vorgesehen, durch die die Kopplungsteile in eine Ausgangsdrehposition vorgespannt sind. In der Ausgangsdrehposition sind die beiden Kopplungsteile in einer vorbestimmten Drehposition relativ zueinander angeordnet bzw. relativ zueinander verdreht. Die Federeinrichtung kann dabei ein Element oder mehrere Elemente umfassen, wobei nicht notgedrungen jedes einzelne Element der Federeinrichtung federnd ausgebildet sein muss, vielmehr ist bei mehreren Elementen auch lediglich ein federnd ausgebildetes Element möglich. Erfindungsgemäß sind die Elemente der Federeinrichtung außerhalb der Steckverzahnung angeordnet.

Indem die Elemente der Federeinrichtung außerhalb der Steckverzahnung angeordnet sind, müssen die engen Verzahnungstoleranzen der Steckverzahnung bei der Herstellung und Auslegung der Federeinrichtung nicht berücksichtigt werden, so dass zum einen die Herstellung der Federeinrichtung für die erfindungsgemäße Kopplungseinrichtung vereinfacht ist. Zum anderen kann die Federeinrichtung derart ausgelegt und dimensioniert werden, dass eine größere Vorspannreserve erreicht wird, so dass die Vorspannkraft der Federeinrichtung selbst bei einem Verschleiß innerhalb der Steckverzahnung bei längerer Betriebsdauer weiterhin ausreichend ist, um Klappergeräusche wirkungsvoll zu unterdrücken. So ist es insbesondere möglich, die Federeinrichtung bereits vor dem Ineinanderstecken der Kopplungsteile vorzuspannen, was bei einer Federeinrichtung, deren Elemente teilweise oder gänzlich innerhalb der Steckverzahnung angeordnet sind, aufgrund der engen Verzahnungstoleranzen innerhalb der Steckverzahnung nicht oder nur eingeschränkt möglich ist. Des Weiteren ist sichergestellt, dass die Federeinrichtung keine Behinderung beim Einfädeln und Ineinanderstecken der Kopplungsteile darstellt.

Um einen Ausgleich axialer Toleranzen oder Bewegungen der über die Kopplungseinrichtung miteinander gekoppelten Vorrichtungen, wie beispielsweise einer Kupplungsvorrichtung, einem Drehschwingungsdämpfer oder einer Kupplungs-Dämpfer-Einheit einerseits und einer Antriebseinheit andererseits, zu ermöglichen, sind die beiden in die Ausgangsdrehposition vorgespannten Kopplungsteile in einer bevorzugten Ausführungsform der erfindungsgemäßen Kopplungseinrichtung, vorzugsweise auch während des Betriebes der Kopplungseinrichtung, in axialer Richtung relativ zueinander verschiebbar.

Wie bereits zuvor erläutert, wird die Steckverzahnung von denjenigem Bereich der Außen- und Innenverzahnung ausgebildet, in dem die Außenverzahnung und die Innenverzahnung miteinander im Eingriff sind. Somit könnte ein Element der Federeinrichtung grundsätzlich auch mit demjenigen Bereich der Außen- oder Innenverzahnung im Eingriff sein, der keinen Teil der Steckverzahnung ausbildet. Dies würde jedoch zu einer größeren axialen Baulänge führen, zumal die Außen- oder Innenverzahnung dann entsprechend länger in axialer Richtung ausgebildet sein müsste oder die gleichlangen Außen- und Innenverzahnungen nicht vollständig ineinandergeschoben werden müssten. Hieraus würde jedoch eine größere axiale Baulänge der Kopplungseinrichtung resultieren. Aus diesem Grunde sind die Elemente der Federeinrichtung in einer weiteren bevorzugten Ausführungsform der erfindungsgemäßen Kopplungseinrichtung außer Eingriff mit der Außenverzahnung und der Innenverzahnung. Die Vorspannung in die Ausgangsdrehposition wird somit nicht über die Außen- und Innenverzahnung bewirkt, so dass die Außen- und Innenverzahnung ausschließlich auf die ihnen zugedachte Funktion abgestimmt werden können, nämlich die Ausbildung der Steckverzahnung. Dabei ist es besonders vorteilhaft, wenn die Außen- und Innenverzahnung im Wesentlichen dieselbe axiale Länge aufweisen.

Durch die vorstehend genannte Ausführungsform der erfindungsgemäßen Kopplungseinrichtung, bei der die Elemente der Federeinrichtung außer Eingriff mit der Außen- und Innenverzahnung sind, ist es somit grundsätzlich möglich, die axiale Baulänge der Kopplungseinrichtung zu verringern. Um diesen Vorteil nunmehr auszunutzen, ist die Federeinrichtung in einer besonders bevorzugten Ausführungsform der erfindungsgemäßen Kopplungseinrichtung vollständig in radialer Richtung nach außen oder innen gegenüber der Steckverzahnung versetzt angeordnet, um einerseits eine Verringerung der axialen Baulänge der Kopplungseinrichtung und andererseits eine größere axiale Baulänge der Federeinrichtung zu ermöglichen. Somit steht der Federeinrichtung ein größerer Bauraum zu Verfügung, so dass diese derart ausgelegt werden kann, dass eine größere Vorspannreserve durch ein Vorspannen der Federeinrichtung noch vor dem Zusammensetzen der Kopplungsteile erzielt werden kann. Wie bereits erwähnt, kann die Federeinrichtung dabei nach außen oder innen gegenüber der Steckverzahnung versetzt angeordnet werden, wobei es bevorzugt ist, wenn die Federeinrichtung in radialer Richtung nach außen gegenüber der Steckverzahnung versetzt angeordnet ist, zumal hierdurch eine einfachere Überwachung der Federeinrichtung beim Ineinanderstecken der Kopplungsteile möglich ist.

In einer vorteilhaften Ausführungsform der erfindungsgemäßen Kopplungseinrichtung sind die in die eine Umfangsrichtung weisenden Zahnflanken der Außenverzahnung in der Ausgangsdrehposition durch die Federeinrichtung gegen die in die entgegengesetzte Umfangsrichtung weisenden Zahnflanken der Innenverzahnung vorgespannt, um Klappergeräusche bei Drehmomentstößen und niedrigen Drehzahlen zu verhindern. Hierbei ist es bevorzugt, wenn die genannten Zahnflanken unmittelbar gegeneinander vorgespannt sind. Bei der letztgenannten bevorzugten Ausführungsform wird somit auf weitere Zwischenelemente, wie beispielsweise federnde Einlagen, verzichtet, die den Herstellungs- und Montageaufwand erhöhen würden, zumal bereits durch die außerhalb der Steckverzahnung angeordneten Elemente der Federeinrichtung eine ausreichende Vorspannung erzielt werden kann.

In einer weiteren vorteilhaften Ausführungsform der erfindungsgemäßen Kopplungseinrichtung weist die Federeinrichtung mindestens ein erstes Verbindungselement, das drehfest oder drehelastisch mit einem ersten Verbindungsabschnitt des einen Kopplungsteils verbunden ist, und mindestens ein zweites Verbindungselement auf, das drehfest oder drehelastisch mit einem zweiten Verbindungsabschnitt des anderen Kopplungsteils verbunden ist. Wie bereits zuvor erwähnt, handelt es sich bei dem ersten Verbindungsabschnitt und bei dem zweiten Verbindungsabschnitt vorzugsweise weder um die Außenverzahnung noch um die Innenverzahnung, so dass eine geringe axiale Baulänge der Kopplungseinrichtung erzielt werden kann.

In einer weiteren vorteilhaften Ausführungsform der erfindungsgemäßen Kopplungseinrichtung weist der erste oder/und zweite Verbindungsabschnitt vorzugsweise mindestens einen Vorsprung, mindestens eine Vertiefung oder eine Verzahnung zur Ausbildung einer Drehmitnahmeverbindung mit dem zugehörigen Verbindungselement der Federeinrichtung auf. So ist es bei einer Vertiefung beispielsweise bevorzugt, wenn die Vertiefung nutförmig ausgebildet ist und sich besonders bevorzugt in axiale Richtung erstreckt, zumal hierdurch ein einfaches Ineinanderstecken der beiden Kopplungsteile möglich ist. Entsprechendes gilt auch für einen Vorsprung, der vorzugsweise in axialer Richtung langgestreckt ausgebildet sein sollte.

In einer weiteren bevorzugten Ausführungsform der erfindungsgemäßen Kopplungseinrichtung ist der erste oder/und zweite Verbindungsabschnitt oder/und das erste oder/und zweite Verbindungselement derart ausgebildet, dass durch das Ineinanderstecken der beiden Kopplungsteile ein Vorspannen der Kopplungsteile in die Ausgangsdrehposition bewirkt wird. Der Verbindungsabschnitt oder/und das Verbindungselement sind demzufolge derart ausgebildet, dass die Federeinrichtung beim Ineinanderstecken der beiden Kopplungsteile automatisch gespannt wird. So ist es beispielsweise bevorzugt, wenn an dem ersten oder/und zweiten Verbindungsabschnitt eine Zwangsführung ausgebildet ist, die eine entsprechende Bewegung des ersten oder/und zweiten Verbindungselements bewirkt, um die Federeinrichtung zu spannen. Die Verbindungsabschnitte oder Verbindungselemente sollten vorzugsweise derart ausgebildet sein, dass ein stetiges Vorspannen der Kopplungsteile in die Ausgangsdrehposition bewirkt wird, zumal hierdurch die Montage der Kopplungseinrichtung vereinfacht ist. Um ein derartiges Vorspannen zu ermöglichen, kann die genannte Zwangsführung beispielsweise einen stetigen Verlauf aufweisen.

Um eine Kopplungseinrichtung zu schaffen, deren Federeinrichtung besonders einfach vorgespannt und platzsparend angeordnet werden kann, ist die Federeinrichtung in einer weiteren bevorzugten Ausführungsform der erfindungsgemäßen Kopplungseinrichtung eine als Drehfeder fungierende Schraubenfeder. Unter einer als Drehfeder fungierenden Schraubenfeder ist hierbei eine Schraubenfeder zu verstehen, deren Windungen in Umfangsrichtung und nicht in Längsrichtung der Schraubenfeder belastet werden.

In einer weiteren bevorzugten Ausführungsform der erfindungsgemäßen Kopplungseinrichtung ist das erste und zweite Verbindungselement der als Schraubenfeder ausgebildeten Federeinrichtung jeweils von einem freien Endabschnitt bzw. einem freien Ende der Schraubenfeder gebildet. Um dabei eine besonders einfache Verbindung zwischen dem Verbindungselement und dem zugehörigen Verbindungsabschnitt an dem jeweiligen Kopplungsteil zu erzielen, erstreckt sich das Verbindungselement in Form des freien Endabschnitts der Schraubenfeder vorzugsweise in radialer Richtung nach innen oder außen.

Gemäß einer weiteren vorteilhaften Ausführungsform der erfindungsgemäßen Kopplungseinrichtung ist die Schraubenfeder um den Verbindungsabschnitt eines Kopplungsteils gewunden, um eine möglichst platzsparende Anordnung der Federeinrichtung zu erzielen. Dabei ist es bevorzugt, wenn die die Federeinrichtung ausbildende Schraubenfeder um den Verbindungsabschnitt des Kopplungsteils mit der Innenverzahnung gewunden ist, zumal die Schraubenfeder in diesem Fall während des Ineinandersteckens der beiden Kopplungsteile besser beobachtet werden kann, was die Montage nachhaltig vereinfacht. Es ist ferner bevorzugt, wenn die Schraubenfeder derart um den Verbindungsabschnitt des Kopplungsteils gewunden ist, dass die Schraubenfeder in radialer Richtung an dem Verbindungsabschnitt abgestützt oder abstützbar ist. Dank der Abstützung der Schraubenfeder in radialer Richtung an dem Verbindungsabschnitt, ist eine besonders einfache und sichere Vormontage der Schraubenfeder an dem Verbindungsabschnitt möglich, bevor die Kopplungsteile ineinandergesteckt werden, wodurch die Montage weiter vereinfacht wird.

In einer weiteren bevorzugten Ausführungsform der erfindungsgemäßen Kopplungseinrichtung weist die Federeinrichtung ein ringförmiges erstes Verbindungselement und ein ringförmiges zweites Verbindungselement auf, die konzentrisch zueinander angeordnet und vorzugsweise als Metall- oder Kunststoffringe ausgebildet sind. Auch kann das erste oder/und zweite Verbindungselement sowohl aus einem Metall- als auch aus einem Kunststoffring zusammengesetzt sein. Das erste und das zweite Verbindungselement sind über mindestens ein zwischenliegendes, in Umfangsrichtung wirkendes Federelement miteinander gekoppelt. Eine derartige Federeinrichtung kann eine besonders geringe axiale Baulänge aufweisen, so dass die Kopplungseinrichtung lediglich eine geringe Ausdehnung in axialer Länge haben muss. Die ringförmigen Verbindungselemente können beispielsweise eine Verzahnung, einen Vorsprung oder eine Vertiefung aufweisen, um mit dem zugehörigen Verbindungsabschnitt des jeweiligen Kopplungsteils verbunden werden zu können. Darüber hinaus können die Verbindungselemente auch mit dem zugehörigen Verbindungsabschnitt verpresst werden, wobei es in diesem Fall bevorzugt ist, wenn das Verbindungselement an der Verbindungsfläche zu dem Verbindungsabschnitt des Kopplungsteils ein entsprechendes Profil oder eine Rändelung aufweist.

Gemäß einer weiteren bevorzugten Ausführungsform der erfindungsgemäßen Kopplungseinrichtung ist das Federelement, das die Kopplung der beiden ringförmigen Verbindungselemente bewirkt, als Gummielement ausgebildet. So ist es insbesondere bevorzugt, wenn das Gummielement ebenfalls ringförmig ausgebildet ist, und den Zwischenraum zwischen den beiden Verbindungselementen im Wesentlichen ausfüllt. Auch sollte das Gummielement vorzugsweise an den Verbindungselementen anvulkanisiert oder festgeklebt sein. Das Kleben hat hierbei gegenüber dem Anvulkanisieren den Vorteil, dass das Verbindungselement nicht thermisch belastet wird. Aus diesem Grunde ist hier vorzugsweise einem Kaltkleber der Vorzug vor einem Heißkleber zu geben, wenngleich die Temperaturen bei einem Heißkleber deutlich noch immer deutlich geringer als beim Anvulkanisieren sind.

In einer zu der vorangehend beschriebenen Ausführungsform alternativen Ausführungsform der erfindungsgemäßen Kopplungseinrichtung ist das Federelement, das die Kopplung der beiden Verbindungselemente bewirkt, als mindestens eine sich in Umfangsrichtung erstreckende Schraubenfeder ausgebildet, die an radialen Vorsprüngen der Verbindungselemente abgestützt ist.

In einer weiteren bevorzugten Ausführungsform der erfindungsgemäßen Kopplungseinrichtung umfasst die Federeinrichtung ein Blechteil, wobei das eine Verbindungselement der Federeinrichtung von einem ringförmigen Tragabschnitt des Blechteils und das andere Verbindungselement von mindestens einer an dem Tragabschnitt angeordneten Federzunge des Blechteils ausgebildet ist. Insoweit entspricht die Federeinrichtung im Wesentlichen der aus der WO 2007/045418 A1 bekannten Federeinrichtung, wobei sich die Federzungen des Blechteils gemäß der Erfindung eben nicht in die Steckverzahnung erstrecken. Aus diesem Grunde kann das Blechteil wesentlich einfacher hergestellt werden, außerdem kann eine größere Blechstärke gewählt werden, um eine entsprechend größere Vorspannkraft zum Vorspannen der Kopplungsteile in die Ausgangsdrehposition zu bewirken. Im Übrigen gelten die Vorteile der bekannten als Blechteil ausgebildeten Federeinrichtung, d. h. das Blechteil kann einfach ausgestanzt werden, um anschließend die Federzungen in die gewünschte Position zu biegen, so dass die Herstellung besonders einfach ist, ohne die engen Verzahnungstoleranzen der Steckverzahnung beachten zu müssen.

Um den Herstellungsaufwand für mindestens eines der Kopplungsteile zu reduzieren und dennoch eine sichere Vorspannung der beiden Kopplungsteile in die Ausgangsdrehposition zu bewirken, umfasst mindestens eines der Kopplungsteile in einer weiteren besonders bevorzugten Ausführungsform der erfindungsgemäßen Kopplungseinrichtung zwei über Schrauben drehfest miteinander verbundene Teile, wobei der Verbindungsabschnitt dieses Kopplungsteils von den Schraubenköpfen der Schrauben gebildet ist, an denen die Federzungen drehfest oder drehelastisch abgestützt sind. Diese Ausführungsform ist für eine Federeinrichtung mit Federzungen besonders geeignet, jedoch ist diese Vorgehensweise auch für Federeinrichtungen, wie beispielsweise die als Drehfeder fungierende Schraubenfeder oder die Federeinrichtung mit den ringförmigen Verbindungselementen, geeignet. Bei den zwei Teilen des genannten Kopplungsteils kann es sich beispielsweise um eine Antriebsausgangsnabe handeln, die über die Schrauben mit einer Schwungscheibe und/oder einer Kurbelwelle drehfest verbunden ist. Somit werden die ohnehin vorhandenen Schraubenköpfe als Verbindungsabschnitt des Kopplungsteils zum Verbinden mit dem zugehörigen Verbindungselement der Federeinrichtung genutzt, ohne dass eine aufwendige Bearbeitung des genannten Kopplungsteils erforderlich ist.

Um die axiale Baulänge der Kopplungseinrichtung zu reduzieren, ist in einer weiteren besonders bevorzugten Ausführungsform der erfindungsgemäßen Kopplungseinrichtung mindestens ein Verbindungselement der Federeinrichtung in radialer Richtung gegen den zugehörigen Verbindungsabschnitt des Kopplungsteils gedrückt oder vorgespannt, wobei das Verbindungselement und der zugehörige Verbindungsabschnitt derart ausgebildet sind, dass das Andrücken in radialer Richtung ein Vorspannen der Kopplungsteile in die Ausgangsdrehposition bewirkt. Dies kann beispielsweise durch entsprechende Rampen an dem Verbindungselement der Federeinrichtung und/oder dem Verbindungsabschnitt des Kopplungsteils bewirkt werden. Auch kommt als Federeinrichtung hier eine besonders lange Schraubenfeder in Frage, die, aufgrund der in radialer Richtung wirkenden Federkraft, in axialer Richtung besonders kurzbauend ausgebildet sein kann.

In einer weiteren besonders vorteilhaften Ausführungsform der erfindungsgemäßen Kopplungseinrichtung kann die Federeinrichtung durch das Ineinanderstecken der beiden Kopplungsteile in axialer Richtung zusammengedrückt werden, wobei die Federeinrichtung dabei derart ausgebildet ist, dass ein Zusammendrücken der Federeinrichtung in axialer Richtung ein zumindest teilweises Verdrehen oder Versetzen des ersten Verbindungselements in Umfangsrichtung relativ zu dem zweiten Verbindungselement bewirkt, so dass ein Vorspannen der Kopplungsteile in die Ausgangsdrehposition bewirkt wird. Hierdurch ist die Montage der erfindungsgemäßen Kopplungseinrichtung wesentlich vereinfacht.

In einer weiteren besonders bevorzugten Ausführungsform der erfindungsgemäßen Kopplungseinrichtung ist die Federeinrichtung in der Art einer Tellerfeder ausgebildet, wobei das erste oder/und zweite Verbindungselement von einer Federzunge ausgebildet ist, die sich in radialer Richtung erstreckt und in axialer Richtung sowie in eine der Umfangsrichtungen geneigt ist. Dank dieser Ausbildung der Federzunge wird das freie Ende der Federzunge beim Zusammendrücken der als Tellerfeder ausgebildeten Federeinrichtung in Umfangsrichtung relativ zu dem anderen Verbindungselement verdreht bzw. versetzt, so dass hierdurch die Vorspannung der Kopplungsteile in die Ausgangsdrehposition bewirkt wird. Die Herstellung einer solchen als Tellerfeder ausgebildeten Federeinrichtung ist besonders einfach.

Der erfindungsgemäße Antriebsstrang weist eine Kupplungsvorrichtung oder/und einen Drehschwingungsdämpfer sowie eine Antriebseinheit auf. Bei der Kupplungsvorrichtung handelt es sich vorzugsweise um eine Mehrfach-Kupplungsvorrichtung, die besonders bevorzugt als Lamellenkupplungsvorrichtung ausgebildet ist. Auch können die Kupplungsvorrichtung und der Drehschwingungsdämpfer eine Kupplungs-Dämpfer-Einheit ausbilden, indem diese hintereinander geschaltet sind, wobei der Drehschwingungsdämpfer in diesem Fall vorzugsweise die der Antriebseinheit zugeordnete Eingangsseite der Kupplungs-Dämpfer-Einheit ausbildet. Erfindungsgemäß ist die Kupplungsvorrichtung, der Drehschwingungsdämpfer oder die Kupplungs-Dämpfer-Einheit über die erfindungsgemäße Kopplungseinrichtung der zuvor beschriebenen Art mit der Antriebseinheit gekoppelt, so dass ein Drehmoment von der Antriebseinheit über die Kopplungseinrichtung auf die Kupplungsvorrichtung, den Drehschwingungsdämpfer oder die Kupplungs-Dämpfer-Einheit übertragen werden kann.

In einer bevorzugten Ausführungsform des erfindungsgemäßen Antriebsstrangs ist das eine Kopplungsteil von einer Eingangsnabe der Kupplungsvorrichtung, des Drehschwingungsdämpfers oder der Kupplungs-Dämpfer-Einheit, an der die Außen- oder Innenverzahnung vorgesehen ist, und vorzugsweise denjenigen Teilen der Kupplungsvorrichtung, des Drehschwingungsdämpfers oder der Kupplungs-Dämpfer-Einheit gebildet, die drehfest mit der Eingangsnabe verbunden sind, während das andere Kopplungsteil von einer Antriebsausgangsnabe, an der die Innen- oder Außenverzahnung vorgesehen ist, und besonders bevorzugt denjenigen Teilen der der Antriebseinheit gebildet ist, die drehfest mit der Antriebsausgangsnabe verbunden sind.

Die Erfindung wird im Folgenden anhand beispielhafter Ausführungsformen unter Bezugnahme auf die beigefügten Zeichnungen näher erläutert. Es zeigen:
Fig. 1 eine Seitenansicht einer ersten Ausführungsform der erfindungsgemäßen Kopplungseinrichtung in geschnittener Darstellung,
Fig. 2 eine vereinfachte Draufsicht auf die Kopplungseinrichtung von Fig. 1 vor dem Vorspannen der Kopplungsteile in die Ausgangsdrehposition,
Fig. 3 die Draufsicht von Fig. 2 nach dem Vorspannen der Kopplungsteile in die Ausgangsdrehposition,
Fig. 4 eine Seitenansicht einer zweiten Ausführungsform der erfindungsgemäßen Kopplungseinrichtung in geschnittener Darstellung,
Fig. 5 eine Vorderansicht der Federeinrichtung aus Fig. 4,
Fig. 6 eine Seitenansicht einer dritten Ausführungsform der erfindungsgemäßen Kopplungseinrichtung in geschnittener Darstellung,
Fig. 7 eine Seitenansicht einer vierten Ausführungsform der erfindungsgemäßen Kopplungseinrichtung in geschnittener Darstellung,
Fig. 8 eine vereinfachte Vorderansicht der Kopplungseinrichtung von Fig. 7 zur Veranschaulichung der Wirkungsweise der Federeinrichtung,
Fig. 9 eine Seitenansicht einer fünften Ausführungsform der erfindungsgemäßen Kopplungseinrichtung in geschnittener Darstellung,
Fig. 10 eine Seitenansicht einer sechsten Ausführungsform der erfindungsgemäßen Kopplungseinrichtung in geschnittener Darstellung,
Fig. 11 eine Seitenansicht einer siebten Ausführungsform der erfindungsgemäßen Kopplungseinrichtung in geschnittener Darstellung und
Fig. 12 eine vereinfachte Vorderansicht der Kopplungseinrichtung von Fig. 11.

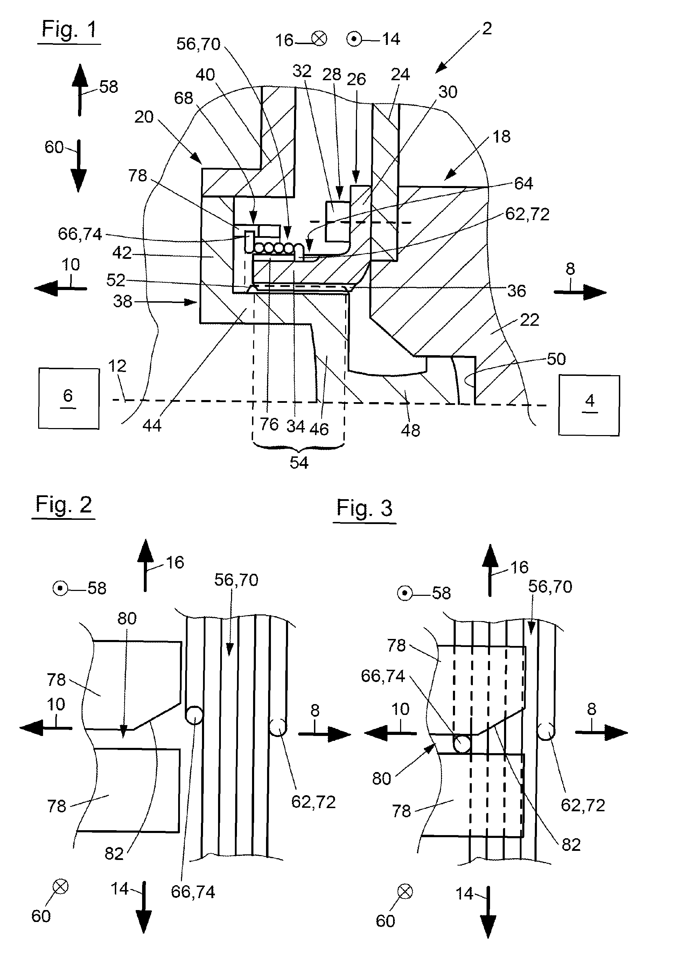

Die Fig. 1 bis 3 zeigen eine erste Ausführungsform der erfindungsgemäßen Kopplungseinrichtung 2, wobei nachstehend zunächst all diejenigen Merkmale der Kopplungseinrichtung 2 beschrieben werden, die für die späteren Ausführungsformen entsprechend gelten.

Die Kopplungseinrichtung 2 ist als Teil eines Antriebsstrangs für ein Kraftfahrzeug ausgebildet und dient der Übertragung eines Drehmoments von einer Antriebseinheit 4 einerseits auf eine Kupplungsvorrichtung, einen Drehschwingungsdämpfer oder eine Kupplungs-Dämpfer-Einheit 6 andererseits. Unter einer Kupplungs-Dämpfer-Einheit sind hierbei eine Kupplungsvorrichtung und ein Drehschwingungsdämpfer zu verstehen, die im Momentenübertragungsweg hintereinander geschaltet und vorzugsweise in einem gemeinsamen Gehäuse angeordnet sind, wobei der Drehschwingungsdämpfer dann vorzugsweise die der Antriebseinheit zugeordnete Eingangsseite der Kupplungs-Dämpfer-Einheit ausbildet. Sowohl die Antriebseinheit 4 als auch die Kupplungsvorrichtung, der Drehschwingungsdämpfer oder die Kupplungs-Dämpfer-Einheit 6 ist lediglich schematisch angedeutet, wobei die Antriebseinheit 4 ausgehend von der Kopplungseinrichtung 2 in axialer Richtung 8 angeordnet ist, während die Kupplungsvorrichtung, der Drehschwingungsdämpfer oder die Kupplungs-Dämpfer-Einheit 6 ausgehend von der Kopplungseinrichtung 2 in der entgegengesetzten axialen Richtung 10 angeordnet ist. Sofern eine Kupplungsvorrichtung oder eine Kupplungs-Dämpfer-Einheit 6 in dem Antriebsstrang eingesetzt wird, ist die Kupplungsvorrichtung 6 als Mehrfachkupplung, vorzugsweise als Doppelkupplung ausgebildet, wobei die Drehmomentübertragung besonders bevorzugt mit Hilfe von Reiblamellen erfolgt. Die Drehachse der Kopplungseinrichtung 2, um die die zu übertragende Drehbewegung erfolgt, ist in Fig. 1 mit dem Bezugszeichen 12 gekennzeichnet. Darüber hinaus sind die beiden entgegengesetzten Umfangsrichtungen 14, 16 anhand entsprechender Pfeile angedeutet.

Die Kopplungseinrichtung 2 setzt sich im Wesentlichen aus einem antriebsseitigen Kopplungsteil 18 und einem abtriebsseitigen Kopplungsteil 20 zusammen, die derart gestaltet sind, dass das Drehmoment von dem Kopplungsteil 18 auf das Kopplungsteil 20 übertragen werden kann. Das Kopplungsteil 18 setzt sich hierbei aus mehreren Teilen zusammen, nämlich aus einer Ausgangswelle 22 der Antriebseinheit 4, einer Schwungscheibe 24 und einer Antriebsausgangsnabe 26, die über mehrere in Umfangsrichtung verteilte Schrauben 28 drehfest miteinander verbunden sind. Zu diesem Zweck weist die Antriebsausgangsnabe 26 einen ringscheibenförmigen Flanschabschnitt 30 auf, über den die Antriebsausgangsnabe 26 mit Hilfe der Schrauben 28 an der Schwungscheibe 24 und der Ausgangswelle 22 befestigt ist. Die Schraubenköpfe 32 sind dabei erhaben gegenüber dem Flanschabschnitt 30 ausgebildet, d. h. diese stehen in axialer Richtung 10 hervor. Darüber hinaus weist die Antriebsausgangsnabe 26 einen rohrförmigen Abschnitt 34 auf, der sich an den radial nach innen weisenden Rand des Flanschabschnitts 30 anschließt und in axiale Richtung 10, also in Richtung der Kupplungsvorrichtung, des Drehschwingungsdämpfers oder der Kupplungs-Dämpfer-Einheit 6, erstreckt. An der radial nach innen weisenden Seite des rohrförmigen Abschnitts 34 ist ferner eine Innenverzahnung 36 vorgesehen.

Das Kopplungsteil 20 ist ebenfalls aus mehreren Teilen zusammengesetzt, nämlich aus einer Eingangsnabe 38 der Kupplungsvorrichtung, des Drehschwingungsdämpfers oder der Kupplungs-Dämpfer-Einheit 6 und einer Mitnehmerscheibe 40, die drehfest miteinander verbunden sind. Im Fall eines Drehschwingungsdämpfers oder einer Kupplungs-Dämpfer-Einheit 6 kann bei der Mitnehmerscheibe 40 auch von dem motorseitigen Dämpferprimärelement gesprochen werden, bei dem es sich beispielsweise um den Dämpferflansch oder das Dämpfergehäuse handeln kann. Die Eingangsnabe 38 weist einen ringscheibenförmigen Abschnitt 42 auf, an den sich in radialer Richtung nach innen ein rohrförmiger Abschnitt 44 anschließt, der sich in axiale Richtung 8 und somit in Richtung der Antriebseinheit 4 erstreckt. An die dem ringscheibenförmigen Abschnitt 42 abgewandte Seite des rohrförmigen Abschnitts 44 schließt sich ein scheibenförmiger Abschnitt 46 an, der das Innere des rohrförmigen Abschnitts 44 gegenüber der Antriebseinheit 4 verschließt. An dem scheibenförmigen Abschnitt 46 ist wiederum ein Pilotzapfen 48 angeordnet, der pilzförmig ausgebildet ist und sich in axiale Richtung 8 in eine zentrale Ausnehmung 50 in der Stirnseite der Ausgangswelle 22 erstreckt, um in radialer Richtung an der Wandung der Ausnehmung 50 abgestützt zu sein. Letzteres bewirkt eine Zentrierung der Eingangsnabe 38 gegenüber der Ausgangswelle 22 und umgekehrt. An der radial nach außen weisenden Seite des rohrförmigen Abschnitts 44 der Eingangsnabe 38 ist ferner eine Außenverzahnung 52 vorgesehen.

Um ein Drehmoment von dem Kopplungsteil 18 auf das Kopplungsteil 20 übertragen zu können, sind die beiden Kopplungsteile 18, 20 derart in axialer Richtung 10 bzw. 8 ineinandergesteckt, dass die Innenverzahnung 36 in einem Bereich in die Außenverzahnung 52 eingreift, wobei die Innen- und Außenverzahnung 36, 52 in diesem Bereich eine Steckverzahnung 54 ausbilden. Aufgrund des zum Ineinanderstecken erforderlichen Fügespiels stehen die beiden Kopplungsteile 18, 20 somit über die Steckverzahnung 54 in spielbehafteter Drehmitnahmeverbindung. Dieses notwendige Fügespiel würde - sofern keine Gegenmaßnahmen ergriffen würden - zu Klappergeräuschen führen, die von einem Aneinanderschlagen der einander zugewandten Zahnflanken der Innen- und Außenverzahnung 36, 52 herrühren. Um dies zu verhindern, umfasst die Kopplungseinrichtung 2 in allen Ausführungsformen eine in Umfangsrichtung 14, 16 wirkende Federeinrichtung 56, die sich aus einem oder mehreren Elementen zusammensetzen kann. So kann sich die Federeinrichtung 56 beispielsweise aus einem federnd ausgebildeten Element und einem nicht federnd ausgebildeten Element zusammensetzen, wobei in einem solchen Fall das federnde Element die Federkraft bewirken würde, während das nicht federnde Element der Übertragung der Federkraft dienen würde. In jedem Fall sind die Kopplungsteile 18, 20 über die in Umfangsrichtung 14, 16 wirkende Federeinrichtung 56 in eine Ausgangsdrehposition vorgespannt, in der die beiden Kopplungsteile 18, 20 in einer vorbestimmten Drehposition relativ zueinander angeordnet sind. Dank der Federeinrichtung 56 sind die in die eine Umfangsrichtung 14 oder 16 weisenden Zahnflanken der Außenverzahnung in der Ausgangsdrehposition gegen die in die entgegengesetzte Umfangsrichtung 16 oder 14 weisenden Zahnflanken der Innenverzahnung 36 vorgespannt. Dabei liegen die genannten Zahnflanken vorzugsweise unmittelbar aneinander an, ohne dass weitere, zwischenliegende Elemente zwischen den Zahnflanken angeordnet sind.

Um einen Ausgleich axialer Toleranzen oder Bewegungen der über die Kopplungseinrichtung 2 miteinander gekoppelten Vorrichtungen, nämlich der Kupplungsvorrichtung, dem Drehschwingungsdämpfer oder der Kupplungs-Dämpfer-Einheit 6 einerseits und der Antriebseinheit 4 andererseits, zu ermöglichen, sind die beiden Kopplungsteile 18, 20 trotz der Vorspannung in die Ausgangsdrehposition auch während des Betriebes der Kopplungseinrichtung 2 in axialer Richtung 8, 10 relativ zueinander verschiebbar.

Wie aus Fig. 1 ersichtlich, sind sämtliche Elemente der Federeinrichtung 56 außerhalb der Steckverzahnung 54 angeordnet. Dies bedeutet, dass kein Element der Federeinrichtung 56 in die Zahnzwischenräume der Steckverzahnung 54 eingreift, so dass die Federeinrichtung 56 bzw. deren Elemente nicht an die engen Verzahnungstoleranzen der Steckverzahnung 54 angepasst sein müssen und die Federeinrichtung 56 derart dimensioniert werden kann, dass eine besonders hohe Vorspannreserve einstellbar ist, die die Klappergeräusche selbst bei einem betriebsdauerbedingten Verschleiß innerhalb der Steckverzahnung 54 unterbindet. Darüber hinaus sind sämtliche Elemente der Federeinrichtung 56 außer Eingriff mit der Außen- und Innenverzahnung 52, 36, wodurch die Montage der Kopplungseinrichtung 2 beim Ineinanderstecken der Kopplungsteile 18, 20 vereinfacht und die axiale Baulänge der Kopplungseinrichtung 2 reduziert ist. Um den letztgenannten Vorteil noch zu verstärken, ist die Federeinrichtung 56 vollständig in radialer Richtung 58 nach außen gegenüber der Steckverzahnung 54 versetzt angeordnet. In einer alternativen Ausführungsform könnte die Federeinrichtung 56 auch vollständig in radialer Richtung 60 nach innen gegenüber der Steckverzahnung 54 versetzt angeordnet sein. Die erstgenannte Ausführungsform ist jedoch zu bevorzugen, zumal hierdurch eine bessere Überwachung der Federeinrichtung 56 beim Ineinanderstecken der Kopplungsteile 18, 20 möglich ist. Darüber hinaus steht in radialer Richtung 58 nach außen in der Regel ein größerer Bauraum zur Verfügung, so dass die Federeinrichtung 56 je nach erforderlicher Vorspannkraft und Vorspannreserve größer dimensioniert werden kann.

Um eine Vorspannung der beiden Kopplungsteile 18, 20 in die eingangs genannte Ausgangsdrehposition zu ermöglichen, ist die Kopplungseinrichtung 2 ferner wie folgt aufgebaut. So weist die Federeinrichtung 56 mindestens ein erstes Verbindungselement 62 auf, das drehfest oder drehelastisch mit einem ersten Verbindungsabschnitt 64 des Kopplungsteils 18 verbunden ist. Ferner weist die Federeinrichtung 56 ein zweites Verbindungselement 66 auf, das drehfest oder drehelastisch mit einem zweiten Verbindungsabschnitt 68 verbunden ist, der an dem Kopplungsteil 20 vorgesehen ist. So kann der erste oder/und zweite Verbindungsabschnitt 64, 68 beispielsweise mindestens einen Vorsprung, mindestens eine Vertiefung oder eine Verzahnung zur Ausbildung einer Drehmitnahmeverbindung mit dem zugehörigen Verbindungselement 62, 66 der Federeinrichtung 56 aufweisen.

Auch ist es bevorzugt, wenn der erste oder/und zweite Verbindungsabschnitt 64, 68 oder/und das erste oder/und zweite Verbindungselement 62, 66 derart ausgebildet ist, dass durch das Ineinanderstecken der beiden Kopplungsteile 18, 20 in axialer Richtung 10, 8 ein vorzugsweise stetiges Vorspannen der Kopplungsteile 18, 20 in die zuvor beschriebene Ausgangsposition bewirkt wird.

Während vorangehend der Aufbau der Kopplungseinrichtung 2 aller Ausführungsformen der Kopplungseinrichtung 2 nach den Fig. 1 bis 12 beschrieben wurde, werden nachstehend die Besonderheiten der einzelnen Ausführungsformen beschrieben. Die vorangehende Beschreibung gilt dabei entsprechend.

In der ersten Ausführungsform der Kopplungseinrichtung 2 nach den Fig. 1 bis 3 ist die Federeinrichtung 56 als eine Schraubenfeder 70 ausgebildet, die als sogenannte Drehfeder fungiert. Das erste Verbindungselement 62 der Schraubenfeder 70 wird von einem freien Endabschnitt 72 der Schraubenfeder 70 gebildet, während das zweite Verbindungselement 66 von einem freien Endabschnitt 74 der Schraubenfeder 70 gebildet ist. Die Schraubenfeder 70 ist um den rohrförmigen Abschnitt 34 der Antriebsausgangsnabe 26 gewunden, so dass die Längsachse der Schraubenfeder 70 mit der Drehachse 12 übereinstimmt. Dabei ist die Schraubenfeder 70 in radialer Richtung 60 an dem rohrförmigen Abschnitt 34 der Antriebsausgangsnabe 26 abgestützt oder abstützbar. Bei dieser Ausführungsform ist die Federeinrichtung 56 somit besonders kurzbauend in radialer Richtung 58, 60. Darüber hinaus ist die Montage erleichtert, zumal die Schraubenfeder 70 vor dem Ineinanderstecken der Kopplungsteile 18, 20 sicher an dem rohrförmigen Abschnitt 34 angebracht und gehalten werden kann. Der als erstes Verbindungselement 62 dienende freie Endabschnitt 72 der Schraubenfeder 70 ist derart gebogen, dass sich dieser in radialer Richtung 60 nach innen erstreckt, während der als zweites Verbindungselement 66 dienende freie Endabschnitt 74 der Schraubenfeder 70 derart gebogen ist, dass sich dieser in radiale Richtung 58 nach außen erstreckt.

Der erste Verbindungsabschnitt 64 ist bei dieser Ausführungsform von der in radialer Richtung 58 nach außen weisenden Seite des rohrförmigen Abschnitts 34 der Antriebsausgangsnabe 26 gebildet, in der eine sich in axialer Richtung 8, 10 erstreckende nutförmige Vertiefung 76 vorgesehen ist, die sich bis zu der in axiale Richtung 10 weisenden Stirnseite des rohrförmigen Abschnitts 34 erstreckt. So greift der freie Endabschnitt 72 in radialer Richtung 60 in die nutförmige Vertiefung 76 ein und bewirkt somit eine drehfeste oder drehelastische Verbindung zwischen der Federeinrichtung 56 in Form der Schraubenfeder 70 und dem Kopplungsteil 18.

Der zweite Verbindungsabschnitt 68, der an dem Kopplungsteil 20 vorgesehen ist, ist als hervorstehender Ansatz 78 ausgebildet, der an dem ringscheibenförmigen Abschnitt 42 der Eingangsnabe 38 angeordnet ist. In dem hervorstehenden Ansatz 78 ist eine Zwangsführung 80 ausgebildet, in der der freie Endabschnitt 74 nach dem Zusammenbau der Kupplungsteile 18, 20 einliegt. So erstreckt sich der freie Endabschnitt 74 in radialer Richtung 58 in die Zwangsführung 80, wie dies insbesondere in Fig. 3 zu erkennen ist. Fig. 2 zeigt hingegen die Situation vor dem Ineinanderstecken der Kopplungsteile 18, 20 bzw. vor dem Vorspannen derselben in die Ausgangsdrehposition. Wird das Kopplungsteil 18 auf das Kopplungsteil 20 aufgesteckt, so gelangt der freie Endabschnitt 74 zunächst in einen vorderen Abschnitt der Zwangsführung 80, der trichterförmig aufgeweitet ist. Der freie Endabschnitt 74 wird dann in axialer Richtung 10 gegen einen schräggestellten bzw. rampenförmigen Rand 82 der Zwangsführung 80 gedrückt, wobei die Schrägstellung bewirkt, dass der freie Endabschnitt 74 in Umfangsrichtung 14 versetzt wird, wodurch die Schraubenfeder 70 gespannt und die Kopplungsteile 18, 20 in die zuvor erwähnte Ausgangsdrehposition vorgespannt werden.

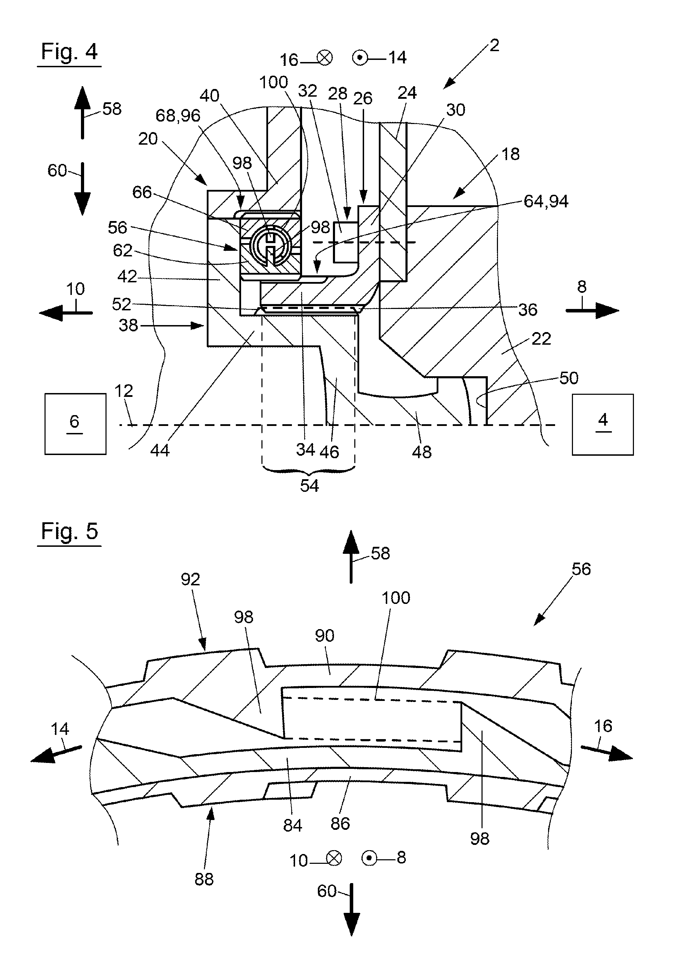

Die Fig. 4 und 5 zeigen eine zweite Ausführungsform der Kopplungseinrichtung 2. Bei der zweiten Ausführungsform der Kopplungseinrichtung 2 ist das erste und zweite Verbindungselement 62, 66 jeweils ringförmig ausgebildet, wobei die beiden ringförmig ausgebildeten Verbindungselemente 62, 66 konzentrisch zueinander angeordnet sind. Das erste Verbindungselement 62 setzt sich hier aus einem Kunststoffring 84 und einem innenliegenden Metallring 86 zusammen, wobei an der radial nach innen weisenden Seite des Metallrings 86 eine Schrägverzahnung 88 ausgebildet ist. Das zweite Verbindungselement 66 wird von einem außenliegenden Kunststoffring 90 gebildet, an dessen in radialer Richtung 58 nach außen weisenden Seite eine Geradverzahnung 92 vorgesehen ist.

Der erste Verbindungsabschnitt 64 ist wiederum an der in radialer Richtung 58 nach außen weisenden Seite des rohrförmigen Abschnitts 34 der Antriebsausgangsnabe 26 vorgesehen, wobei der erste Verbindungsabschnitt 64 eine Außenverzahnung 94 in Form einer Schrägverzahnung aufweist, die mit der als Innenverzahnung ausgebildeten Schrägverzahnung 88 des ersten Verbindungselements 62 korrespondiert. Der zweite Verbindungsabschnitt 68 ist bei dieser Ausführungsform als eine Innenverzahnung 96 an einem rohrförmigen Abschnitt der Mitnehmerscheibe 40 ausgebildet, wobei die Innenverzahnung 96 als Geradverzahnung ausgebildet ist. An den in radialer Richtung 58 bzw. 60 einander zugewandten Seiten der Kunststoffringe 84, 90 sind ferner radiale Vorsprünge 98 ausgebildet, zwischen denen mindestens eine sich in Umfangsrichtung 14, 16 erstreckende Schraubenfeder 100 angeordnet ist. Werden die beiden Kopplungsteile 18, 20 in axialer Richtung 10, 8 ineinandergesteckt, so bewirken die Außenverzahnung 94 und die Schrägverzahnung 88, dass das ringförmige erste Verbindungselement 62 unter Vorspannung der Schraubenfeder 100 in Umfangsrichtung 14, 16 relativ zu dem zweiten Verbindungselement 66 verdreht wird, das durch Ineinandergreifen von Geradverzahnung 92 und Innenverzahnung 96 in seiner Position verbleibt.

Bei dieser Ausführungsform könnte auf den Metallring 86 unter Umständen verzichtet werden, in diesem Fall müsste die Schrägverzahnung 88 dann an dem Kunststoffring 84 vorgesehen sein. Auch muss nicht zwingend eine Schrägverzahnung 88 bzw. eine Außenverzahnung 94, die schräggestellt ist, vorgesehen sein, vielmehr ist jedwede Ausbildung des ersten Verbindungselements 62 und des ersten Verbindungsabschnitts 64 möglich, die beim Ineinanderstecken der Kopplungsteile 18, 20 in axialer Richtung 10, 8 ein Verdrehen des ringförmigen ersten Verbindungselements gegenüber dem ringförmig zweiten Verbindungselement 66 ermöglicht. Auch muss nicht zwingend eine Verzahnung 92 an dem ringförmigen zweiten Verbindungselement 66 vorgesehen sein. So könnte das zweite Verbindungselement 66 auf seiner in radialer Richtung 58 nach außen weisenden Seite ebenso eine Rändelung oder ähnliches aufweisen, um das zweite Verbindungselement 66 in den rohrförmigen Abschnitt der Mitnehmerscheibe 40 einpressen zu können und einen sicheren Halt desselben innerhalb dieses rohrförmigen Abschnitts zu ermöglichen.

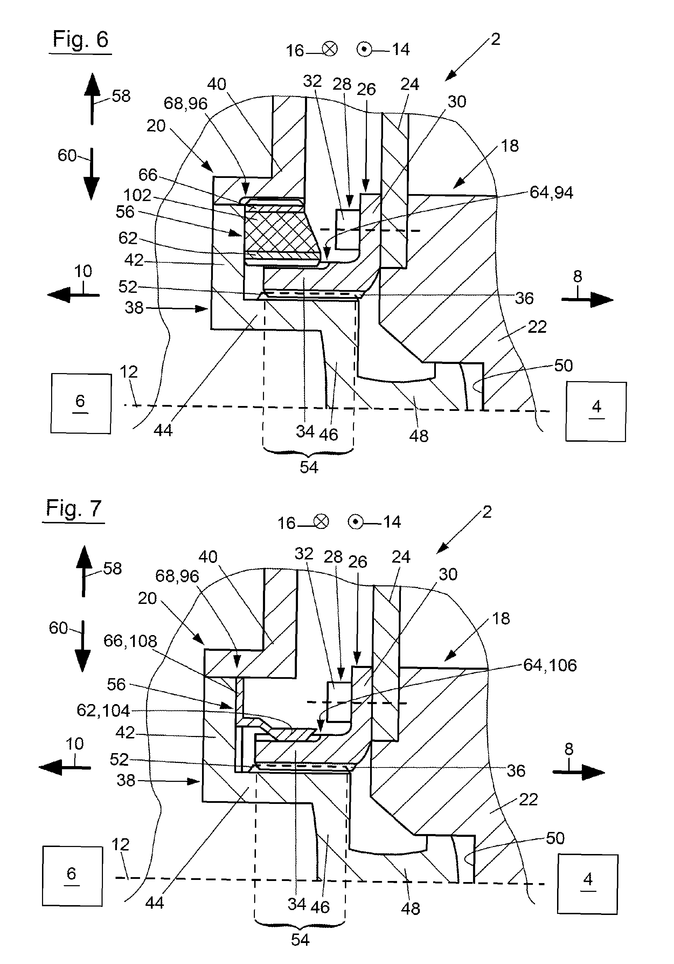

Fig. 6 zeigt eine dritte Ausführungsform der Kopplungseinrichtung 2, wobei die Kopplungseinrichtung 2 in der dritten Ausführungsform der zweiten Ausführungsform nach den Fig. 4 und 5 im Wesentlichen ähnelt, so dass nachstehend lediglich auf die Unterschiede eingegangen werden soll, wobei ansonsten die vorangehende Beschreibung der zweiten Ausführungsform entsprechend gilt.

Die beiden Verbindungselemente 62, 66 der Federeinrichtung 56 sind wiederum ringförmig ausgebildet, wobei diese in der dritten Ausführungsform als Metallringe ausgebildet sind. Die beiden Verbindungselemente 62, 66 sind wiederum über ein zwischenliegendes in Umfangsrichtung 14, 16 wirkendes Federelement gekoppelt, wobei das Federelement in diesem Fall als umlaufendes Gummielement 102 ausgebildet ist. Das Gummielement 102 ist dabei an den in radialer Richtung 58, 60 einander zugewandten Seiten der ringförmigen Verbindungselemente 62, 66 anvulkanisiert, vorzugsweise festgeklebt.

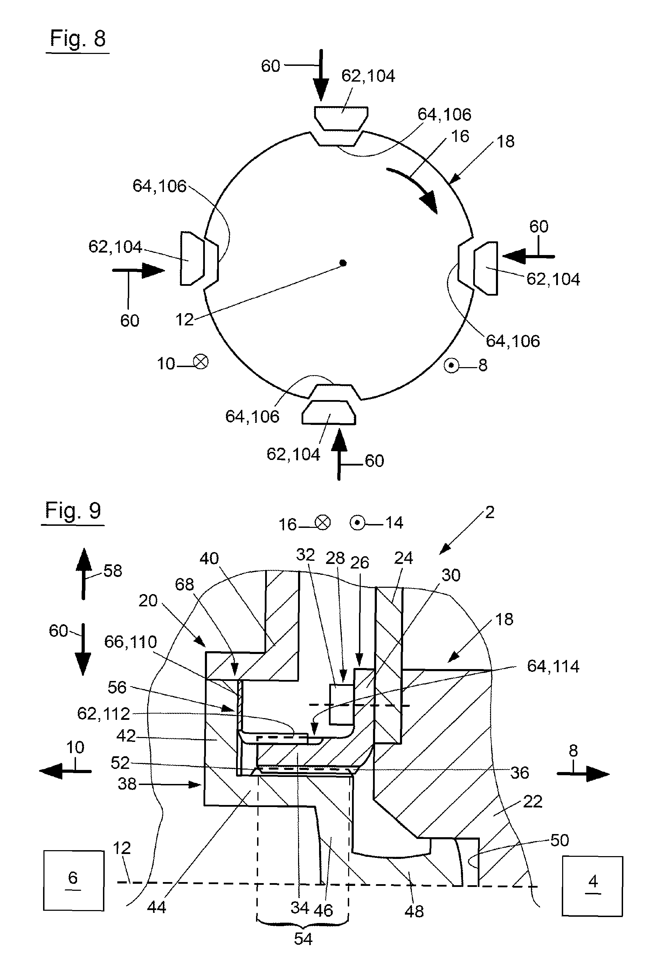

Die Fig. 7 und 8 zeigen eine vierte Ausführungsform der Kopplungseinrichtung 2. Bei dieser vierten Ausführungsform wird das erste Verbindungselement 62 der Federeinrichtung 56 von mindestens einem in radialer Richtung 60 nach innen gegen den ersten Verbindungsabschnitt 64 des Kopplungsteils 18 gedrückten oder vorgespannten Federzunge 104 gebildet. Der der Federzunge 104 zugeordnete erste Verbindungsabschnitt 64 ist wiederum an der in radialer Richtung 58 nach außen weisenden Seite des rohrförmigen Abschnitts 34 der Antriebsausgangsnabe 26 vorgesehen und weist eine oder mehrere nutförmige Vertiefungen 106 auf. Das zweite Verbindungselement 66 wird hingegen von einem ringförmigen Tragabschnitt 108 gebildet, der drehfest mit dem Kopplungsteil 20 verbunden ist.

Wie aus Fig. 8 ersichtlich, sind die in Umfangsrichtung 14, 16 weisenden Seiten der Federzungen 104 und der nutförmigen Vertiefungen 106 derart schräggestellt bzw. rampenförmig ausgebildet, dass das Eindrücken der Federzungen 104 in radialer Richtung 60 in die nutförmigen Vertiefungen 106 ein Vorspannen der Kopplungsteile 18, 20 in die zuvor beschriebene Ausgangsdrehposition bewirkt. Bei dieser Ausführungsform kann somit eine Federeinrichtung 56 zum Einsatz kommen, die in axialer Richtung 8, 10 besonders kurzbauend ausgebildet ist, zumal die Federeinrichtung 56 lediglich derart angeordnet werden muss, dass deren Federkraft in radialer Richtung 60 wirkt, um ein Vorspannen der Kopplungsteile 18, 20 in Umfangsrichtung 14, 16 zu bewirken.

Fig. 9 zeigt eine fünfte Ausführungsform der Kopplungseinrichtung 2. In der fünften Ausführungsform ist die Federeinrichtung 56 im Wesentlichen von einem Blechteil gebildet, wobei das zweite Verbindungselement 66 von einem ringförmigen Tragabschnitt 110 des Blechteils gebildet ist, während das erste Verbindungselement 62 von mindestens einer an dem ringförmigen Tragabschnitt 110 angeordneten Federzunge 112 des Blechteils ausgebildet ist. Der ringförmige Tragabschnitt 110 kann auf jedwede Weise drehfest oder drehelastisch mit dem zweiten Verbindungsabschnitt 68 des Kopplungsteils 20 verbunden sein, während sich die freien Endabschnitte der Federzungen 112 in eine Außenverzahnung 114 an der in radialer Richtung 58 nach außen weisenden Seite des rohrförmigen Abschnitts 34 der Antriebsausgangsnabe 26 erstrecken und dadurch ein Vorspannen in die Ausgangsdrehposition bewirken. Somit ist auch bei dieser fünften Ausführungsform der Kopplungseinrichtung 2 der erste Verbindungsabschnitt 64 an der nach außen weisenden Seite des rohrförmigen Abschnitts 34 vorgesehen. Auch in diesem Fall können anstelle der Außenverzahnung 114 Vertiefungen oder Vorsprünge an der nach außen weisenden Seite des rohrförmigen Abschnitts 34 vorgesehen sein.

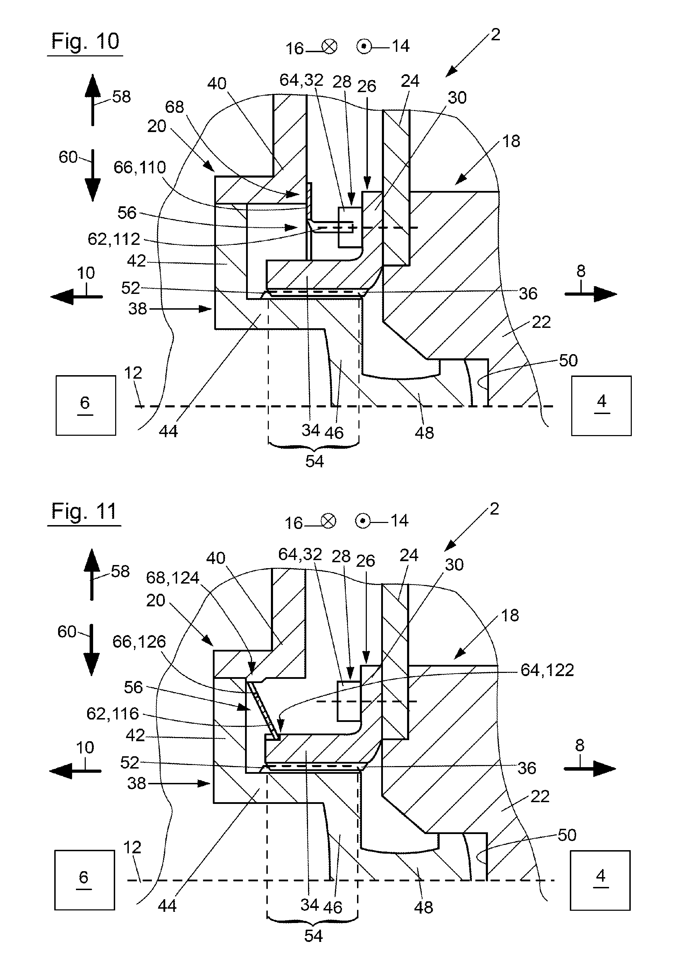

Fig. 10 zeigt eine sechste Ausführungsform der Kopplungseinrichtung 2, wobei die sechste Ausführungsform eine vorteilhafte Abwandlung der fünften Ausführungsform nach Fig. 9 darstellt. Bei der sechsten Ausführungsform gemäß Fig. 10 wird der erste Verbindungsabschnitt 64 von den Schraubenköpfen 32 der Schrauben 28 gebildet. Die Federzungen 112 erstrecken sich dabei derart weit in axiale Richtung 8, dass diese in Umfangsrichtung 14, 16 drehfest oder drehelastisch an den Seiten der Schraubenköpfe 32 abgestützt sind. Diese Ausführungsform hat den Vorteil, dass eine ohnehin vorhandenes Bauteil, nämlich die Schraubenköpfe 32, zur Ausbildung des ersten Verbindungsabschnitts 64 verwendet wird, so dass kein spezieller erster Verbindungsabschnitt 64 in Form einer Außenverzahnung 114 oder ähnliches an dem Kopplungsteil 18 vorgesehen sein muss, wodurch der Herstellungsaufwand reduziert ist. In diesem Zusammenhang sei erwähnt, dass die Schraubenköpfe 32 auch vorteilhaft zur Ausbildung des ersten Verbindungsabschnitts 64 bei den vorstehend und nachstehend beschriebenen Ausführungsformen herangezogen werden könnten.

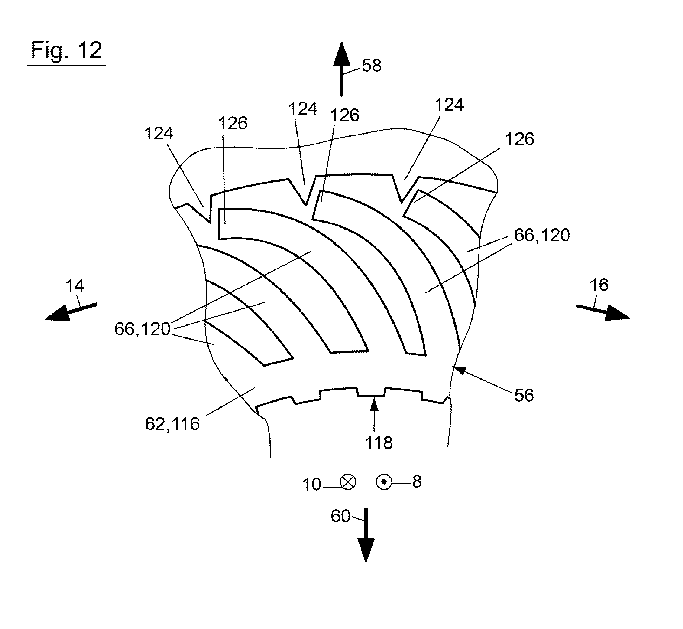

Die Fig. 11 und 12 zeigen eine siebte Ausführungsform der Kopplungseinrichtung 2. In der siebten Ausführungsform ist die Federeinrichtung 56 in der Art einer Tellerfeder ausgebildet. Während das erste Verbindungselement 62 von einem ringförmigen Tragabschnitt 116 mit einer Innenverzahnung 118 gebildet ist, sind die zweiten Verbindungselemente 66 von Federzungen 120 gebildet, die an dem ringförmigen Tragabschnitt 116 angeordnet sind. Die Federzungen 120 erstrecken sich ausgehend von dem ringförmigen Tragabschnitt 116 in radialer Richtung 58 nach außen und sind ferner in Umfangsrichtung 14 sowie in axialer Richtung 10 geneigt. Der erste Verbindungsabschnitt 64 wird wiederum von einer Außenverzahnung 122 an der in radialer Richtung 58 nach außen weisenden Seite des rohrförmigen Abschnitts 34 der Antriebsausgangsnabe 26 gebildet, während der zweite Verbindungsabschnitt 68 von einer Innenverzahnung 124 an einem rohrförmigen Abschnitt der Mitnehmerscheibe 40 gebildet wird.

Durch das Ineinanderstecken der beiden Kopplungsteile 18, 20 wird die tellerfederförmige Federeinrichtung 56 in axialer Richtung 8, 10 zusammengedrückt, so dass die zweiten Verbindungselemente 66 in Form der Federzungen 120 zumindest teilweise relativ zu dem ersten Verbindungselement 62 in Form des ringförmigen Tragabschnitts 116 in Umfangsrichtung 14 verdreht bzw. versetzt werden. Dieses Verdrehen oder Versetzen der zweiten Verbindungselemente 66 bewirkt wiederum das Vorspannen der Kopplungsteile 18, 20 in die Ausgangsdrehposition, indem die freien Enden 126 der Federzungen 120 in Umfangsrichtung 14 gegen die Zähne der Innenverzahnung 124 gedrückt werden.

### Bezugszeichenliste

- 2: Kopplungseinrichtung
- 4: Antriebseinheit
- 6: Kupplungsvorrichtung,
- Drehschwingungsdämpfer oder: Kupplungs-Dämpfer-Einheit
- 8: axiale Richtung
- 10: axiale Richtung
- 12: Drehachse
- 14: Umfangsrichtung
- 16: Umfangsrichtung
- 18: Kopplungsteil
- 20: Kopplungsteil
- 22: Ausgangswelle
- 24: Schwungscheibe
- 26: Antriebsausgangsnabe
- 28: Schrauben
- 30: Flanschabschnitt
- 32: Schraubenköpfe
- 34: rohrförmiger Abschnitt
- 36: Innenverzahnung
- 38: Eingangsnabe
- 40: Mitnehmerscheibe
- 42: ringscheibenförmiger Abschnitt
- 44: rohrförmiger Abschnitt
- 46: scheibenförmiger Abschnitt
- 48: Pilotzapfen
- 50: Ausnehmung
- 52: Außenverzahnung
- 54: Steckverzahnung
- 56: Federeinrichtung

- 58: radiale Richtung
- 60: radiale Richtung
- 62: erstes Verbindungselement
- 64: erster Verbindungsabschnitt
- 66: zweites Verbindungselement
- 68: zweiter Verbindungsabschnitt
- 70: Schraubenfeder
- 72: freier Endabschnitt
- 74: freier Endabschnitt
- 76: nutförmige Vertiefung
- 78: hervorstehender Ansatz
- 80: Zwangsführung
- 82: schräggestellter Rand
- 84: Kunststoffring
- 86: Metallring
- 88: Schrägverzahnung
- 90: Kunststoffring
- 92: Geradverzahnung
- 94: Außenverzahnung
- 96: Innenverzahnung
- 98: radiale Vorsprünge
- 100: Schraubenfeder
- 102: Gummielement
- 104: Federzunge
- 106: nutförmige Vertiefungen
- 108: ringförmiger Tragabschnitt
- 110: ringförmiger Tragabschnitt
- 112: Federzunge
- 114: Außenverzahnung
- 116: ringförmiger Tragabschnitt
- 118: Innenverzahnung
- 120: Federzunge

- 122: Außenverzahnung
- 124: Innenverzahnung
- 126: freies Ende

## Patentansprüche

1. Kopplungseinrichtung (2) aus einem Kopplungsteil (20) mit einer Außenverzahnung (52) und einem Kopplungsteil (18) mit einer Innenverzahnung (36), wobei die Außenverzahnung (52) und die Innenverzahnung (36) unter Ausbildung einer Steckverzahnung (54) ineinandergreifen, so dass die Kopplungsteile (18, 20) über die Steckverzahnung (54) in spielbehafteter Drehmitnahmeverbindung stehen, wobei die Kopplungsteile (18, 20) über eine in Umfangsrichtung (14, 16) wirkende Federeinrichtung (56) aus einem oder mehreren Elementen in eine Ausgangsdrehposition vorgespannt sind, in der die beiden Kopplungsteile (18, 20) in einer vorbestimmten Drehposition relativ zueinander angeordnet sind, **dadurch gekennzeichnet, dass** die Elemente der Federeinrichtung (56) außerhalb der Steckverzahnung (54) angeordnet sind.

2. Kopplungseinrichtung (2) nach Anspruch 1, **dadurch gekennzeichnet, dass** die Elemente der Federeinrichtung (56) außer Eingriff mit der Außen- und Innenverzahnung (52, 36) zur Ausbildung der Steckverzahnung (54) sind.

3. Kopplungseinrichtung (2) nach einem der Ansprüche 1 oder 2, **dadurch gekennzeichnet, dass** die Federeinrichtung (56) vollständig in radialer Richtung (58, 60) nach außen oder innen gegenüber der Steckverzahnung (54) versetzt angeordnet ist.

4. Kopplungseinrichtung (2) nach einem der vorangehenden Ansprüche, **dadurch gekennzeichnet, dass** die in die eine Umfangsrichtung (14, 16) weisenden Zahnflanken der Außenverzahnung (52) in der Ausgangsdrehposition durch die Federeinrichtung (56), vorzugsweise unmittelbar, gegen die in die entgegengesetzte Umfangsrichtung (16, 14) weisenden Zahnflanken der Innenverzahnung (36) vorgespannt sind.

5. Kopplungseinrichtung (2) nach einem der vorangehenden Ansprüche, **dadurch gekennzeichnet, dass** die Federeinrichtung (56) mindestens ein erstes Verbindungselement (62), das drehfest oder drehelastisch mit einem ersten Verbindungsabschnitt (64) des einen Kopplungsteils (18) verbunden ist, und mindestens ein zweites Verbindungselement (66) aufweist, das drehfest oder drehelastisch mit einem zweiten Verbindungsabschnitt (68) des anderen Kopplungsteils (20) verbunden ist, wobei der erste oder/und zweite Verbindungsabschnitt (64, 68) vorzugsweise mindestens einen Vorsprung, mindestens eine Vertiefung oder eine Verzahnung zur Ausbildung einer Drehmitnahmeverbindung mit dem zugehörigen Verbindungselement (62, 66) aufweist.

6. Kopplungseinrichtung (2) nach Anspruch 5, **dadurch gekennzeichnet, dass** der erste oder/und zweite Verbindungsabschnitt (64, 68) oder/und das erste oder/und zweite Verbindungselement (62, 66) derart ausgebildet ist, dass durch das Ineinanderstecken der beiden Kopplungsteile (18, 20) ein, vorzugsweise stetiges, Vorspannen der Kopplungsteile (18, 20) in die Ausgangsdrehposition bewirkt wird.

7. Kopplungseinrichtung (2) nach einem der vorangehenden Ansprüche, **dadurch gekennzeichnet, dass** die Federeinrichtung (56) eine als Drehfeder fungierende Schraubenfeder (70) ist, wobei das erste und zweite Verbindungselement (62, 66) vorzugsweise jeweils von einem freien Endabschnitt (72, 74) der Schraubenfeder (70) gebildet ist, der sich besonders bevorzugt in radiale Richtung (58, 60) nach außen oder innen erstreckt.

8. Kopplungseinrichtung (2) nach Anspruch 7, **dadurch gekennzeichnet, dass** die Schraubenfeder (70) um den Verbindungsabschnitt (64, 68) eines der Kopplungsteile (18, 20), vorzugsweise um den Verbindungsabschnitt (64) des Kopplungsteils (18) mit der Innenverzahnung (36), gewunden, vorzugsweise in radialer Richtung (58, 60) an dem Verbindungsabschnitt (64, 68) abgestützt oder abstützbar ist.

9. Kopplungseinrichtung (2) nach einem der Ansprüche 5 oder 6, **dadurch gekennzeichnet, dass** die Federeinrichtung (56) ein ringförmiges erstes Verbindungselement (62) und ein ringförmiges zweites Verbindungselement (66) aufweist, die konzentrisch zueinander angeordnet und vorzugsweise als Metall- oder Kunststoffringe ausgebildet sind, wobei das erste und zweite Verbindungselement (62, 66) über mindestens ein zwischenliegendes, in Umfangsrichtung (14, 16) wirkendes Federelement gekoppelt sind, wobei das Federelement vorzugsweise als Gummielement (102), das besonders bevorzugt an den Verbindungselementen (62, 66) anvulkanisiert oder festgeklebt ist, oder als sich in Umfangsrichtung (14, 16) erstreckende Schraubenfeder (100) ausgebildet ist, die an radialen Vorsprüngen (98) der Verbindungselemente (62, 66) abgestützt ist.

10. Kopplungseinrichtung (2) nach einem der Ansprüche 5 oder 6, **dadurch gekennzeichnet, dass** die Federeinrichtung (56) ein Blechteil umfasst, wobei das eine Verbindungselement (66) von einem ringförmigen Tragabschnitt (110) des Blechteils und das andere Verbindungselement (62) von mindestens einer an dem Tragabschnitt (110) angeordneten Federzunge (112) des Blechteils ausgebildet ist.

11. Kopplungseinrichtung (2) nach Anspruch 10, **dadurch gekennzeichnet, dass** mindestens eines der Kopplungsteile (18, 20) zwei über Schrauben (28) drehfest miteinander verbundene Teile umfasst, wobei der Verbindungsabschnitt (64) des Kopplungsteiles (18) von den Schraubenköpfen (32) der Schrauben (28) gebildet ist, an denen die Federzungen (112) drehfest oder drehelastisch abgestützt sind.

12. Kopplungseinrichtung (2) nach einem der Ansprüche 5 oder 6, **dadurch gekennzeichnet, dass** mindestens ein Verbindungselement (62) der Federeinrichtung (56) in radialer Richtung (60) gegen den zugehörigen Verbindungsabschnitt (64) des Kopplungsteiles (18) gedrückt oder vorgespannt ist, wobei das Verbindungselement (62) und der zugehörige Verbindungsabschnitt (64) derart ausgebildet sind, dass das Andrücken in radialer Richtung (60) ein Vorspannen der Kopplungsteile (18, 20) in die Ausgangsdrehposition bewirkt.

13. Kopplungseinrichtung (2) nach einem der Ansprüche 5 oder 6, **dadurch gekennzeichnet, dass** die Federeinrichtung (56) durch das Ineinanderstecken der beiden Kopplungsteile (18, 20) in axialer Richtung (8, 10) zusammendrückbar ist, wobei die Federeinrichtung (56) derart ausgebildet ist, dass ein Zusammendrücken der Federeinrichtung (56) in axialer Richtung (8, 10) ein zumindest teilweises Verdrehen oder Versetzen des ersten Verbindungselements (62) in Umfangsrichtung (14, 16) relativ zu dem zweiten Verbindungselement (66) bewirkt, so dass ein Vorspannen der Kopplungsteile (18, 20) in die Ausgangsdrehposition bewirkt wird.

14. Kopplungseinrichtung (2) nach Anspruch 13, **dadurch gekennzeichnet, dass** die Federeinrichtung (56) in der Art einer Tellerfeder ausgebildet ist, wobei das erste oder/und zweite Verbindungselement (62, 66) von einer Federzunge (120) ausgebildet ist, die sich in radialer Richtung (58, 60) erstreckt und in axialer Richtung (8, 10) sowie in eine der Umfangsrichtungen (14, 16) geneigt ist.

15. Antriebsstrang mit einer Kupplungsvorrichtung (6) oder/und einem Drehschwingungsdämpfer und mit einer Antriebseinheit (4), **dadurch gekennzeichnet, dass** die Kupplungsvorrichtung (6) oder der Drehschwingungsdämpfer über eine Kopplungseinrichtung (2) nach einem der Ansprüche 1 bis 14 mit der Antriebseinheit (4) gekoppelt ist, wobei das eine Kopplungsteil (20) vorzugsweise von der Eingangsnabe (38) der Kupplungsvorrichtung (6) oder des Drehschwingungsdämpfers, an der die Außen- oder Innenverzahnung (52) vorgesehen ist, und besonders bevorzugt denjenigen Teilen (40) der Kupplungsvorrichtung (6) oder des Drehschwingungsdämpfers gebildet ist, die drehfest mit der Eingangsnabe (38) verbunden sind, während das andere Kopplungsteil (18) vorzugsweise von einer Antriebsausgangsnabe (26), an der die Innen- oder Außenverzahnung (36) vorgesehen ist, und besonders bevorzugt denjenigen Teilen (22, 24, 28) der Antriebseinheit (4) gebildet ist, die drehfest mit der Antriebsausgangsnabe (26) verbunden sind.
